# EUROPEAN PATENT APPLICATION

(11) **EP 4 651 224 A1**
(43) Date of publication of application: **19.11.2025**
(21) Application number: 25177066.5
(22) Date of filing: 16.05.2025
(51) Int. Cl.: H01M 4/131, H01M 4/505, H01M 4/525, H01M 4/58, H01M 4/62, H01M 10/052, H01M 4/02

(54) **POSITIVE ELECTRODE AND RECHARGEABLE LITHIUM BATTERIES**

(30) Priority: 16.05.2024 KR 20240063792
(71) Applicant: SAMSUNG SDI CO., LTD., Yongin-si, Gyeonggi-do 17084 (KR)
(72) Inventor: Kim, Eunji, 17084 Yongin-si, Gyeonggi-do (KR); Choi, Jewon, 17084 Yongin-si, Gyeonggi-do (KR); Lee, Jungmin, 17084 Yongin-si, Gyeonggi-do (KR); Nam, Junghyun, 17084 Yongin-si, Gyeonggi-do (KR)
(74) Representative: Michalski Hüttermann & Partner Patentanwälte mbB

(57) **Abstract**

Disclosed are a positive electrode, and a rechargeable lithium battery including the positive electrode, the positive electrode including a positive electrode current collector and a positive electrode active material layer on the positive electrode current collector. The positive electrode active material layer includes a positive electrode active material, a binder, and a conductive material. The binder includes a siloxane-based repeating unit and an imide-based repeating unit, and the binder includes the siloxane-based repeating unit in an amount of ≥ 1 wt% to ≤ 49 wt%.

## Description

### BACKGROUND

### 1. Field

Positive electrodes and rechargeable lithium batteries are disclosed.

### 2. Description of the Related Art

A portable information device such as, e.g., a cell phone, a laptop, smart phone, and the like, or an electric vehicle, typically uses a rechargeable lithium battery having high energy density and portability as a driving power source. It may thus be advantageous to use a rechargeable lithium battery with high energy density as a driving power source or power storage power source for hybrid or electric vehicles.

Rechargeable lithium batteries typically include a positive electrode and a negative electrode including an active material capable of intercalating and deintercalating lithium ions, and an electrolyte solution. Electrical energy is produced through oxidation and reduction reactions, when lithium ions are intercalated/deintercalated from the positive electrode and negative electrode.

Transition metal compounds such as lithium cobalt-based oxide, lithium nickel-based oxide, and lithium manganese-based oxide are typically used as positive electrode active materials for rechargeable lithium batteries, and crystalline carbon materials such as natural graphite or artificial graphite or amorphous carbon materials are typically used as negative electrode active materials.

### SUMMARY

Some example embodiments include a positive electrode that can reduce or suppress the occurrence of cracks in the electrode plate by securing desired or improved adhesion, oxidation resistance, and flexibility, and thereby improve the capacity and cycle-life characteristics of the battery.

In some example embodiments, a positive electrode includes a positive electrode current collector, and a positive electrode active material layer on the positive electrode current collector, wherein the positive electrode active material layer includes a positive electrode active material, a binder, and a conductive material, the binder includes a siloxane-based repeating unit, and an imide-based repeating unit, and the binder includes the siloxane-based repeating unit in an amount of ≥ 1 wt% to ≤ 49 wt%.

Some example embodiments also include a rechargeable lithium battery including the aforementioned positive electrode, a negative electrode, and an electrolyte.

The positive electrode according to some example embodiments can reduce or suppress the occurrence of cracks in the electrode plate by securing desired or improved adhesion, oxidation resistance, and flexibility. A rechargeable lithium battery including the positive electrode can achieve desired or improved capacity and cycle-life characteristics.

### BRIEF DESCRIPTION OF THE DRAWINGS

FIGS. 1 to 4 are cross-sectional views schematically illustrating rechargeable lithium batteries according to some example embodiments.
FIG. 5 illustrates the results of evaluating the adhesion of the positive electrodes manufactured in Example 1 and Comparative Example 1.
FIG. 6 illustrates the stress-strain curve results measured for the binder used in Example 1 and Comparative Example 1.
FIG. 7 illustrates the results of linear sweep voltamery (LSV) evaluation measurements for rechargeable lithium battery cells manufactured in Example 1 and Comparative Examples 2 and 3.
FIG. 8 illustrates the results of measuring the capacity retention rate in each cycle for the rechargeable lithium battery cells manufactured in Example 1 and Comparative Example 1.

### DETAILED DESCRIPTION

Hereinafter, example embodiments will be described in detail so that those of ordinary skill in the art can readily implement the example embodiments. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" indicates a mixture, a laminate, a composite, a copolymer, an alloy, a blend, a reaction product, or the like of the constituents.

Herein, it should be understood that terms such as "comprises," "includes," or "have" are intended to designate the presence of an embodied feature, number, step, element, or a combination thereof, but it does not preclude the possibility of the presence or addition of one or more other features, number, step, element, or a combination thereof.

In the drawings, the thickness of layers, films, panels, regions, and the like, may be exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. Unless otherwise defined, the average particle diameter may mean the diameter (D₅₀) of particles having a cumulative volume of 50 volume% in the particle size distribution. As used herein, when a definition is not otherwise provided, the average particle diameter indicates a diameter (D₅₀) of particles having a cumulative volume of 50 volume% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

As used herein, when a definition is not otherwise provided, "substituted" refers to replacement of at least one hydrogen by a substituent of a halogen (F, Cl, Br, I), a hydroxy group or a salt thereof, a C1 to C20 alkoxy group, a nitro group, a cyano group, an amine group, an imino group, an azido group, an amidino group, a hydrazino group, a hydrazone group, a carbonyl group, a carbamyl group, a thiol group or a salt thereof, a thioether group, an ester group, an ether group, a carboxyl group or a salt thereof, a sulfonic acid group or a salt thereof, a phosphoric acid group or a salt thereof, a C1 to C20 alkyl group, a C2 to C20 alkenyl group, a C2 to C20 alkynyl group, a C6 to C20 aryl group, a C3 to C20 cycloalkyl group, a C3 to C20 cycloalkenyl group, a C3 to C20 cycloalkynyl group, a C2 to C20 heterocycloalkyl group, a C2 to C20 heterocycloalkenyl group, a C2 to C20 heterocycloalkynyl group, a C3 to C20 heteroaryl group, or a combination thereof.

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode

In some example embodiments, a positive electrode includes a positive electrode current collector, and a positive electrode active material layer on the positive electrode current collector, wherein the positive electrode active material layer includes a positive electrode active material, a binder, and a conductive material, the binder includes a siloxane-based repeating unit, and an imide-based repeating unit, and the binder includes the siloxane-based repeating unit in an amount of ≥ 1 wt% to ≤ 49 wt%.

The positive electrode includes a positive electrode current collector, and a positive electrode active material layer on the positive electrode current collector. The positive electrode current collector may include Al, SUS, or a combination thereof, and may be in the form of a foil, sheet, or foam, but is not limited thereto.

The positive electrode active material layer includes a positive electrode active material, a binder, and a conductive material. The binder used in the positive electrode active material layer is configured to adhere the positive electrode active material particles to each other and the positive electrode active material to the current collector. Such a binder may be or include a fluorine-based binder such as polyvinylidene fluoride (PVdF). However, due to environmental concerns, interest in environment-friendly binders that do not include fluorine-based binders such as, e.g., PVdF, is increasing.

As part of the need for such environment-friendly research, binders that do not include fluorine atoms may be advantageous, but most binders that do not include fluorine atoms may have insufficient adhesiveness, and may not meet the level of PVdF.

In addition, fluorine-based binders such as PVdF have strong oxidation resistance, making it challenging to develop a positive electrode binder that can replace the fluorine-based binders. In particular, it may be challenging to achieve high density in the case of positive electrode active materials with small particle sizes, such as a lithium iron phosphate compound (LFP) or a lithium manganese iron phosphate compound (LMFP), and thus in order to manufacture high-density batteries, it may be advantageous to develop a binder that is flexible and can be pressed well during compressing.

Polyimide can be considered a desired or improved candidate as polyimide has adhesiveness and oxidation resistance at a level that can replace fluorine-based binders such as PVdF. However, general polyimide is an engineering plastic and may lack flexibility, and thus there may be limits to the sole application of polyimide to electrode plates.

Accordingly, in some example embodiments, by using a binder with a siloxane-based functional group introduced into polyimide, desired or improved adhesiveness and oxidation resistance can be imparted to the electrode plate, and high flexibility can be secured, improving processability compared to the prior art to provide a positive electrode that can reduce or prevent cracks in the electrode plates, and thereby improve battery performance.

For at least this purpose, the binder includes a siloxane-based repeating unit, and an imide-based repeating unit. At this time, the binder may not include fluorine. As a binder applicable to positive electrode plates, polyimide has desired or improved adhesive force, but the sole application of polyimide may be limited due to lack of flexibility. Accordingly, by introducing a siloxane functional group into a binder including an imide-based repeating unit, higher adhesiveness and oxidation resistance can be secured, and desired or improved flexibility can also be secured, reducing or preventing the occurrence of cracks in the electrode plate and the swelling of the binder to produce a rechargeable battery with low resistance and long cycle-life characteristics.

In the positive electrode active material layer, the binder may include ≥ 1 wt% to ≤ 49 wt% of the siloxane-based repeating unit, for example, for example ≥ 1 wt% to ≤ 47 wt%, ≥ 5 wt% to ≤ 45 wt%, or ≥ 10 wt% to ≤ 40 wt%, based on 100 wt% of the total binder. Within any of the above ranges, desired or improved oxidation resistance can be achieved while ensuring higher flexibility. In addition, even when a small amount of binder is used, crack formation can be reduced or suppressed by effectively relieving stress within the electrode plate.

The siloxane-based repeating unit may include a substituted or unsubstituted siloxane group. In some example embodiments, the siloxane-based repeating unit may include a siloxane group substituted or unsubstituted with at least one of an alkyl group, an alkenyl group, an alkynyl group, a cycloalkyl group, or an aryl group. When the above is satisfied, the siloxane-based repeating unit can be advantageous in securing desired or improved flexibility and oxidation resistance.

As an example, the siloxane-based repeating unit may include siloxane group substituted or unsubstituted with an alkyl group, or siloxane group substituted or unsubstituted with a C1 to C5 alkyl group, and for example, may include a siloxane group substituted or unsubstituted with a methyl group. When the above is satisfied, the effect of securing flexibility and oxidation resistance by adding the siloxane-based repeating unit can be improved or maximized.

As an example, the siloxane-based repeating unit may include a structure represented by Chemical Formula 1 below. When the siloxane-based repeating unit includes a structure represented by Chemical Formula 1, the effect of securing desired or improved flexibility and oxidation resistance can be improved or maximized.

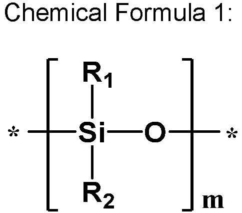

In Chemical Formula 1,
R₁ and R₂ each independently are or include at least one of hydrogen, a substituted or unsubstituted C1 to C5 alkyl group, a substituted or unsubstituted C2 to C6 alkenyl group, a substituted or unsubstituted a C2 to C6 alkynyl group, a substituted or unsubstituted a C3 to C6 cycloalkyl group, or a substituted or unsubstituted a C6 to C20 aryl group,
m is an integer in a range of 100 to 3,000, and
the * mark indicates a position linked to another element.

In some example embodiments, R₁ and R₂ each independently are or include a substituted or unsubstituted C1 to C5 alkyl group.

As an example, m may be an integer in a range of 100 to 2,500, for example, an integer in a range of 500 to 2,500, or an integer in a range of 1,000 to 2,000.

The binder includes an imide-based repeating unit. Here, the imide-based repeating unit may include a substituted or unsubstituted imide group, and the imide-based repeating unit may be or include a repeating unit including a substituted or unsubstituted imide group. When the above is satisfied, desired or improved adhesiveness and oxidation resistance can be secured.

In some example embodiments, the imide-based repeating unit may include an aromatic ring. Through this, rigidity that can maintain a stable structure during cycling can be secured, and oxidation resistance can be improved.

As an example, the imide group may be or include an aromatic ring-containing imide group. For example, the aromatic ring-containing imide group may be represented by Chemical Formula 2, and at least one hydrogen of the aromatic ring-containing imide group may be substituted or unsubstituted with an additional substituent. When the above is satisfied, desired or improved adhesiveness and oxidation resistance may be achieved.

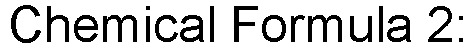

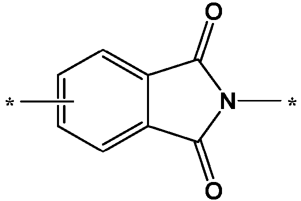

In Chemical Formula 2, * indicates a position linked to another element.

As an example, the imide-based repeating unit may include one or more of an ether group and a thioether group, and an imide group. Alternatively, the imide-based repeating unit may include an imide group and an ether group. By additionally introducing the thioether group or ether group into the imide-based repeating unit, in addition to the imide group described above, some chain flexibility can be imparted to the imide-based repeating unit, thereby further improving flexibility.

For example, the imide-based repeating unit may include a structure represented by Chemical Formula 3. When the above is satisfied, it is possible to provide chain flexibility while having desired or improved adhesiveness and rigidity.

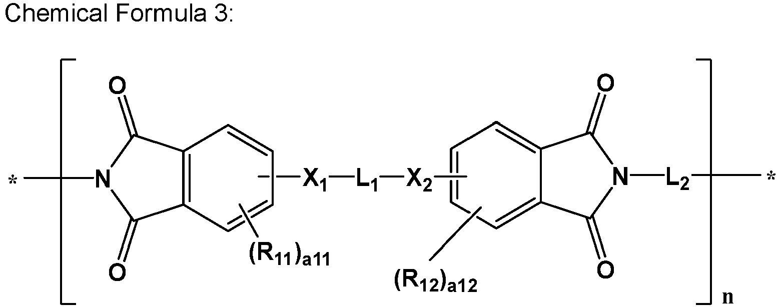

In Chemical Formula 3,
X₁ and X₂ each independently are or include O or S,
L₁ is or includes at least one of a substituted or unsubstituted C1 to C5 alkylene group, a substituted or unsubstituted C6 to C20 arylene group, or a combination thereof,
L₂ is or includes a substituted or unsubstituted C6 to C20 arylene group,
R₁₁ and R₁₂ each independently are or include at least one of hydrogen, deuterium, a halogen, a C1 to C5 alkyl group, or a combination thereof,
a₁₁ and a₁₂ are each independently an integer in a range of 1 to 3,
n is an integer in a range of 100 to 2,500, and
   * indicates a position linked to another element.

As an example, n may be an integer in a range of 200 to 2,500, for example, an integer in a range of 500 to 2,000, or an integer in a range of 1,000 to 1,500.

As an example, the imide-based repeating unit may include a structure represented by Chemical Formula 4. When the imide-based repeating unit includes a structure represented by Chemical Formula 4, chain flexibility can be imparted while having desired or improved adhesiveness and rigidity.

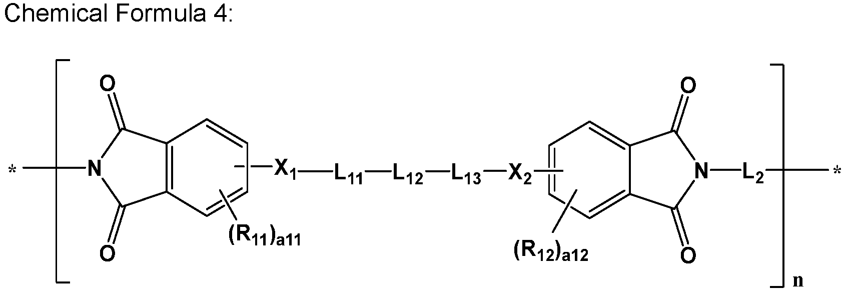

In Chemical Formula 4,
X₁ and X₂ each independently are or include O or S,
L₂, L₁₁, and L₁₃ each independently are or include a C6 to C20 arylene group,
L₁₂ is or includes a substituted or unsubstituted C1 to C5 alkylene group,
R₁₁ and R₁₂ each independently are or include at least one of hydrogen, deuterium, a halogen, a C1 to C5 alkyl group, or a combination thereof,
a₁₁ and a₁₂ are each independently an integer in a range of 1 to 3,
n is an integer in a range 100 to 2,500, and
   * indicates a position linked to another element.

As an example, the imide-based repeating unit may include a structure represented by Chemical Formula 5. When the imide-based repeating unit includes a structure represented by Chemical Formula 5, chain flexibility can be imparted while having desired or improved adhesiveness and strength.

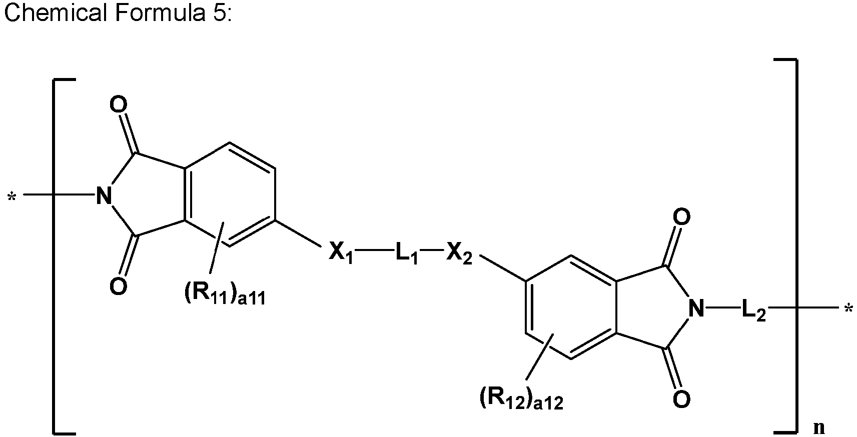

In Chemical Formula 5,
the definitions of X₁, X₂, L₁, L₂, R₁₁, R₁₂, a₁₁, a₁₂, and n are the same as in Chemical Formula 3, and * indicates a position linked to another element.

As an example, the imide-based repeating unit may include a structure represented by Chemical Formula 6. When the imide-based repeating unit includes a structure represented by Chemical Formula 6, chain flexibility can be imparted while having desired or improved adhesiveness and oxidation resistance.

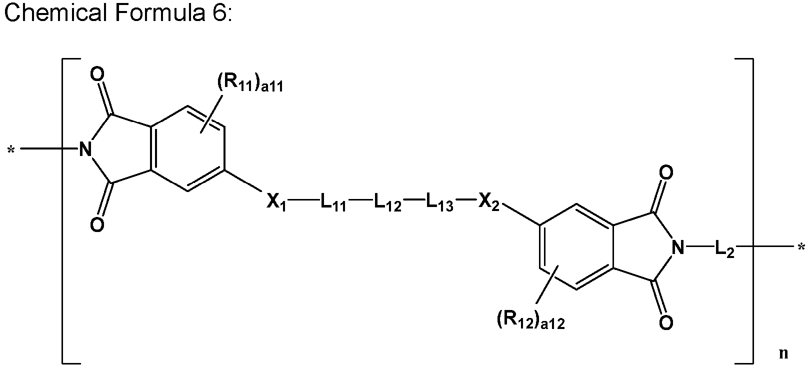

In Chemical Formula 6,
the definitions of X₁, X₂, L₂, L₁₁, L₁₃, L₁₂, R₁₁, R₁₂, a₁₁, a₁₂, and n are the same as in Chemical Formula 4, and * indicates a position linked to another element.

As an example, the imide-based repeating unit may include a structure represented by Chemical Formula 7. When the imide-based repeating unit includes a structure represented by Chemical Formula 7, desired or improved adhesiveness, chain flexibility, and oxidation resistance may be achieved.

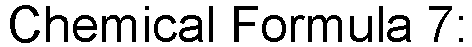

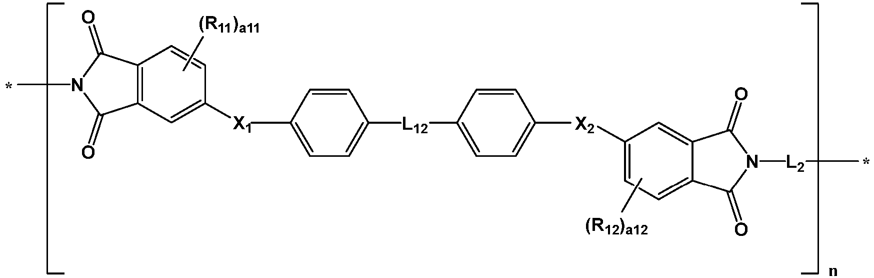

In Chemical Formula 7,
the definitions of X₁, X₂, L₂, L₁₂, R₁₁, R₁₂, a₁₁, a₁₂, and n are the same as in Chemical Formula 4, and * indicates a position linked to another element.

As an example, the imide-based repeating unit may include a structure represented by Chemical Formula 8. When the imide-based repeating unit includes a structure represented by Chemical Formula 8, desired or improved adhesiveness, chain flexibility, and oxidation resistance may be achieved.

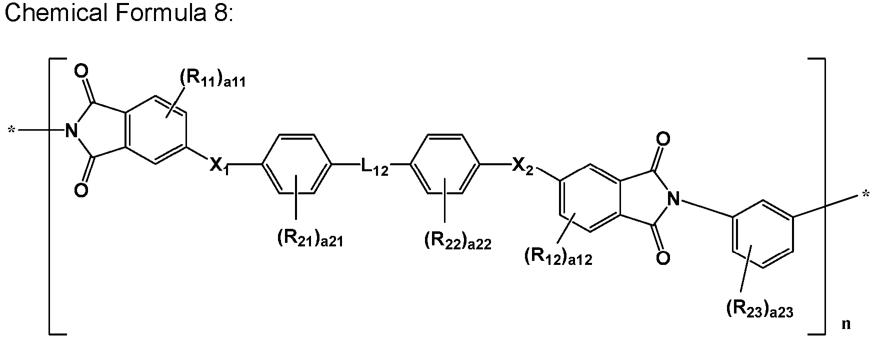

In Chemical Formula 8,
the definitions of X₁, X₂, L₁₂, R₁₁, R₁₂, a₁₁, a₁₂, and n are the same as in Chemical Formula 4,
R₂₁ to R₂₃ each independently are or include at least one of hydrogen, deuterium, a halogen, a C1 to C5 alkyl group, or a combination thereof, and
a21 to a23 are each independently an integer in a range of 1 to 4, and * indicates a position linked to another element.

As an example, the imide-based repeating unit may include a structure represented by Chemical Formula 9. When the imide-based repeating unit includes a structure represented by Chemical Formula 9, the effects of securing desired or improved adhesiveness, chain flexibility, and oxidation resistance can be achieved, improved or maximized.

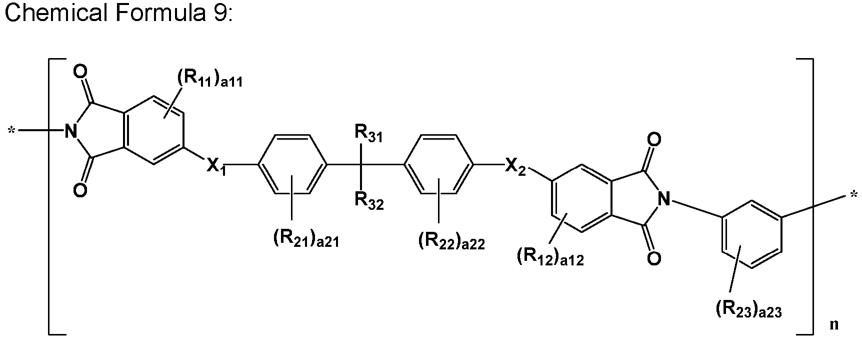

In Chemical Formula 9,
the definitions of X₁, X₂, R₁₁, R₁₂, a₁₁, a₁₂, n, R₂₁ to R₂₃, and a21 to a23 are the same as in Chemical Formula 8, and
R₃₁ and R₃₂ each independently are or include a C1 to C5 alkyl group, and * indicates a position linked to another element.

As an example, the imide-based repeating unit may include a structure represented by Chemical Formula 10. When the imide-based repeating unit includes a structure represented by Chemical Formula 10, the effects of securing desired or improved adhesiveness, chain flexibility, and oxidation resistance can be achieved, improved or maximized.

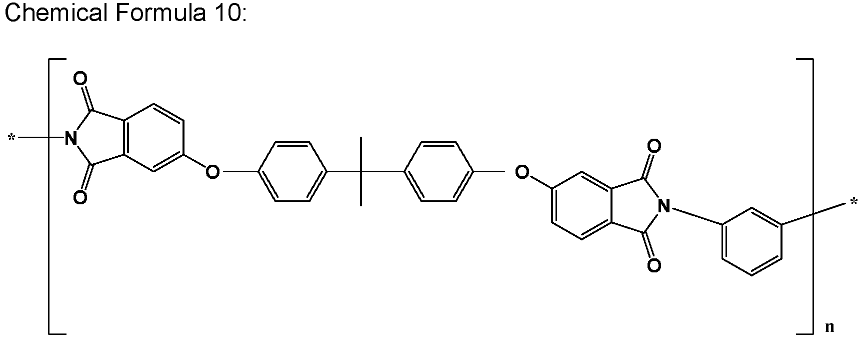

**In** Chemical Formula 10, the definition of n is the same as in Chemical Formula 4, and * indicates a position linked to another element.

**In** some example embodiments, the binder may include ≥ 51 wt% to ≤ 99 wt% of the imide-based repeating unit, for example, for example ≥ 53 wt% to ≤ 99 wt%, ≥ 55 wt% to ≤ 95 wt%, or ≥ 60 wt% to ≤ 90 wt% based on 100 wt% of the total binder. Within any of the above ranges, the effect of securing flexibility by introducing the siloxane-based repeating unit and the effect of securing adhesiveness and oxidation resistance by introducing the imide-based repeating unit can be harmonized with each other. Accordingly, the occurrence of cracks in the electrode plate can be effectively reduced or suppressed, and the low resistance and long cycle-life characteristics of the battery can be achieved.

As an example, the binder may have a weight average molecular weight (Mw) of ≥ 100,000 g/mol to ≤ 2,000,000 g/mol, for example, ≥ 100,000 g/mol to ≤ 1,000,000 g/mol, ≥ 500,000 g/mol to ≤ 1,500,000 g/mol, or ≥ 1,000,000 g/mol to ≤ 2,000,000 g/mol. Within any of the above ranges, the desired level of adhesiveness and flexibility can be effectively achieved. For example, the weight average molecular weight may be measured by gel permeation chromatography (GPC: gel permeation chromatography, PL GPC220, Agilent Technologies).

As an example, the positive electrode active material layer may further include an additional binder in addition to the binder described above. As these additional binders, binders commonly used in the art can be used without limitation. Examples of additional binders may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

In some example embodiments, an amount of the binder may be ≥ 0.5 wt% to ≤ 5 wt%, ≥ 0.5 wt% to ≤ 3 wt%, or ≥ 1 wt% to ≤ 2.5 wt% based on 100 wt% of the positive electrode active material layer. Here, the amount of the binder may be the total binder amount in the positive electrode active material layer.

The positive electrode active material layer includes a positive electrode active material and a conductive material in addition to the aforementioned binder component.

### Positive Electrode Active Material

The positive electrode active material may be or include a compound capable of reversible intercalation and deintercalation of lithium (lithiated intercalation compound). Examples of the positive electrode active material may include a lithium transition metal composite oxide, and for example, one or more types of composite oxides of lithium and a metal including at least one of cobalt, manganese, nickel, or a combination thereof may be used.

For example, the positive electrode active material may be or include at least one of lithium cobalt oxide, lithium nickel oxide, lithium nickel cobalt oxide, lithium nickel cobalt aluminum oxide, lithium nickel cobalt manganese oxide, lithium nickel manganese oxide, lithium manganese oxide, a lithium iron phosphate compound, a lithium manganese iron phosphate compound, or a combination thereof.

As another example, a compound represented by any of the following chemical formulas can be used. LiₐA_{1-b}X_{b}O_{2-c}D_{c} (0.90 ≤ a ≤ 1.8, 0 ≤ b ≤ 0.5, 0 ≤ c ≤ 0.05); LiₐMn_{2-b}X_{b}O_{4-c}D_{c} (0.90 ≤ a ≤ 1.8, 0 ≤ b ≤ 0.5, 0 ≤ c ≤ 0.05); LiₐNi_{1-b-c}Co_{b}X_{c}O₂₋ₐDₐ (0.90 ≤ a ≤ 1.8, 0 ≤ b ≤ 0.5, 0 ≤ c ≤0.5, 0 < a < 2);LiₐNi_{1-b-c}Mn_{b}X_{c}O₂₋ₐDₐ (0.90 ≤ a ≤ 1.8, 0 ≤ b ≤ 0.5, 0 ≤ c ≤ 0.5,0 < a < 2);LiₐNi_{b}Co_{c}L¹_{d}GₑO₂ (0.90 ≤ a ≤ 1.8, 0 ≤ b ≤ 0.9, 0 ≤ c ≤ 0.5, 0 ≤ d ≤ 0.5, 0 ≤ e ≤ 0.1); LiₐNiG_{b}O₂ (0.90 ≤ a ≤ 1.8, 0.001 ≤ b ≤ 0.1); LiₐCoG_{b}O₂ (0.90 ≤ a ≤ 1.8, 0.001 ≤ b ≤ 0.1); LiₐMn_{1-b}G_{b}O₂ (0.90 ≤ a ≤ 1.8, 0.001 ≤ b ≤ 0.1); LiₐMn₂G_{b}O₄ (0.90 ≤ a ≤ 1.8, 0.001 ≤ b ≤ 0.1); LiₐMn_{1-g}G_{g}PO₄ (0.90 ≤ a ≤ 1.8, 0 ≤ g ≤ 0.5); Li_{(3-f)}Fe₂(PO₄)₃ (0 ≤ f ≤ 2); LiₐFePO₄ (0.90 ≤ a ≤ 1.8)

In the above chemical formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; Q is or includes at least one of Ti, Mo, Mn, or a combination thereof; Z is or includes at least one of Cr, V, Fe, Sc, Y, or a combination thereof; and L¹ is or includes at least one of Mn, Al or a combination thereof.

As an example, the positive electrode active material may include lithium transition metal phosphate, and the lithium transition metal phosphate may include one or more of the compounds represented by Chemical Formulas 11 to 15 below. The positive electrode active material including the lithium transition metal phosphate has a relatively small particle size, making it challenging to achieve high density. Therefore, when using this lithium transition metal phosphate in combination with the binder according to some example embodiments, not only can the adhesiveness and flexibility of the electrode plate be achieved, but the energy density of the positive electrode can also be improved or maximized.

The positive electrode active material includes lithium transition metal phosphate, and the lithium transition metal phosphate may include one or more of the compounds represented by Chemical Formulas 11 to 15.

Chemical Formula 11: Liₐ₁Fe₍₁₋ₓ₁₎M¹ₓ₁PO₄

In Chemical Formula 11, 0.90≤a1≤1.5, 0 ≤ x1 ≤ 0.4, and M¹ is or includes at least one of Al, Ca, Ce, Cr, Cu, La, Mg, Mn, Mo, Nb, Ni, Sn, Sr, Ti, V, W, Y, Zn, Zr, or a combination thereof.

Chemical Formula 12: Lia₂Mnₓ₂Fe_{(1-x2-y2)}M²_{y2}PO₄

In Chemical Formula 12, 0.90≤a2≤1.5, 0.1≤x2≤0.9, 0≤y2≤0.9, and M² is or includes at least one of Al, Ca, Ce, Cr, Cu, La, Mg, Mo, Nb, Ni, Sn, Sr, Ti, V, W, Y, Zn, Zr, or a combination thereof.

Chemical Formula 13: Liₐ₃Mn₍₁₋ₓ₃₎M³ₓ₃PO₄

In Chemical Formula 13, 0.90≤a3≤1.5, 0≤x3≤0.4, and M³ is or includes at least one of Al, Ca, Ce, Cr, Cu, La, Mg, Mo, Nb, Ni, Sn, Sr, Ti, V, W, Y, Zn, Zr, or a combination thereof.

Chemical Formula 14: Liₐ₄Ti₍₂₋ₓ₄₎M⁴ₓ₄(PO₄)₃

In Chemical Formula 14, 0.90≤a4≤1.5, 0≤x4≤0.4, and M⁴ is or includes at least one of Al, Ca, Ce, Cr, Cu, La, Mg, Mo, Nb, Ni, Sn, Sr, V, W, Y, Zn, Zr, or a combination thereof.

Chemical Formula 15: Liₐ₅Ti₍₁₋ₓ₅₎M⁵ₓ₅PO₅

In Chemical Formula 15, 0.90≤a5≤1.5, 0≤x5≤0.4, and M⁵ is or includes at least one of Al, Ca, Ce, Cr, Cu, La, Mg, Mo, Nb, Ni, Sn, Sr, V, W, Y, Zn, Zr, or a combination thereof.

For example, the lithium transition metal phosphate may include at least one of LiFePO₄, LiMn_{0.7}Fe_{0.3}PO₄, LiMn_{0.6}Fe_{0.4}PO₄, LiMn_{0.5}Fe_{0.5}PO₄, LiMn_{0.4}Fe_{0.6}PO₄, LiMn_{0.3}Fe_{0.7}PO₄, LiMnPO₄, LiTiPOs, LiTi₂(PO₄)₃, or a combination thereof.

As an example, the positive electrode active material may include at least one of a lithium iron phosphate compound, a lithium manganese iron phosphate compound, or a combination thereof, and may include, for example, a compound represented by Chemical Formula 11, a compound represented by Chemical Formula 12, or a combination thereof. This positive electrode active material can achieve cost reduction and safety effects and realize high output characteristics, and when combined with a binder according to some example embodiments, the positive electrode active material can increase the energy density of the positive electrode and improve the adhesiveness and flexibility of the electrode plate.

The lithium transition metal phosphate is in the form of particles, and the average particle diameter (D₅₀) of the particles may be in a range of ≥ 0.01 µm to ≤ 2 µm, for example, ≥ 0.1 µm to ≤ 1 µm, or ≥ 0.2 µm to ≤ 0.9 µm.

In some example embodiments, the lithium transition metal phosphate may be in the form of first particles, second particles, or a mixture of first particles and second particles.

The first particles may be or include an assembly of a plurality of nano-sized primary particles or secondary particles. The first particles may have a spherical or elliptical shape as the primary particles are closely agglomerated with each other. The average particle diameter of the first particles may be, for example, in a range of ≥ 2 µm to ≤ 15 µm, ≥ 3 µm to ≤ 12 µm, or ≥ 3 µm to ≤ 10 µm. The average particle diameter of the first particles may be larger than the average particle diameter of the second particles, which will be described later. The average particle diameter of the primary particle of the first particles may be, for example, in a range of ≥ 10 nm to ≤ 400 nm, ≥ 20 nm to ≤ 300 nm, or ≥ 50 nm to ≤ 200 nm. As an example, the average particle diameter of the first particles may be measured by randomly selecting about 30 first particles from an electron microscope image of lithium transition metal phosphate, and in the particle size distribution, the diameter (D₅₀) of particles with a cumulative volume of 50% by volume may be taken as the average particle diameter. The average particle diameter of the primary particles of the first particle may be determined by measuring the size of about 30 primary particles in an electron microscope image of the surface or cross-section of the first particle and in the particle size distribution, the diameter (D₅₀) of particles with a cumulative volume of 50 volume% may be taken as the average particle diameter.

The porosity of the first particles may be in a range of ≥ 20% to ≤ 50%. As an example, the porosity may be obtained by measuring the area ratio of the portion occupied by pores within the particle using an image analysis program such as, e.g., Image J in a scanning electron microscope image of the cross-section of the first particle.

The second particle may have the form of a single particle. The average particle diameter of the second particles may be, for example, in a range of ≥ 10 nm to ≤ 900 nm, ≥ 50 nm to ≤ 500 nm, or ≥ 100 nm to ≤ 300 nm. The average particle diameter of the second particles may be smaller than the average particle diameter of the first particles, and may be equal to or larger than the average particle diameter of the primary particles of the first particles. As an example, the average particle diameter of the second particles may be measured by randomly selecting about 30 second particles from an electron microscope image of lithium transition metal phosphate, and in the particle size distribution, the diameter (D₅₀) of particles with a cumulative volume of 50% by volume may be taken as the average particle diameter.

The lithium transition metal phosphate may further include a carbon coating layer on the surface of the particle. The carbon coating layer can lower the resistance of the positive electrode by improving the electrical conductivity of the lithium transition metal phosphate. The carbon coating layer may be formed, for example, using at least one raw material such as or including at least one of glucose, sucrose, lactose, starch, oligosaccharide, polyoligosaccharide, fructose, cellulose, a polymer of furfuryl alcohol, a block copolymer of ethylene and ethylene oxide, a vinyl resin, a cellulose resin, a phenolic resin, a pitch-based resin, and a tar-based resin. For example, the carbon coating layer may be formed through a sintering process after placing the raw materials on the surface of the lithium transition metal phosphate particles.

As another example, the positive electrode active material may include a cobalt-based positive electrode active material having a cobalt content that is greater than or equal to ≤ 30 mol%, greater than or equal to ≤ 50 mol%, or greater than or equal to ≤ 80 mol% based on 100 mol% of metals excluding lithium in the lithium transition metal composite oxide.

As another example, the positive electrode active material may include a high nickel-based positive electrode active material having a nickel content that is greater than or equal to ≤ 80 mol% based on 100 mol% of metals excluding lithium in the lithium transition metal composite oxide. The nickel content in the high-nickel-based positive electrode active material may be greater than or equal to ≤ 85 mol%, greater than or equal to ≤ 90 mol%, greater than or equal to ≤ 91 mol%, or greater than or equal to ≤ 94 mol% and less than or equal to ≤ 99 mol% based on 100 mol% of metals excluding lithium. The high-nickel-based positive electrode active materials can achieve high capacity and can be applied to high-capacity, high-density rechargeable lithium batteries.

### Conductive Material

A conductive material is configured to provide conductivity to an electrode, and in the battery being constructed, any electronically conductive material can be used as long as the electronically conductive material does not cause adverse chemical change in the battery. Examples of the conductive material may include a carbon-based material such as or including at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as or including a polyphenylene derivative; or a mixture thereof.

As an example, the conductive material may include at least one of particulate nano-carbon containing carbon black, acetylene black, ketjen black, or a combination thereof, or the conductive material may include at least one of fibrous nano-carbon including carbon nanofibers, carbon nanotubes, or a combination thereof, and for example, the conductive material may include both particulate nano-carbon and fibrous nano-carbon.

In some example embodiments, an amount of the conductive material may be in a range of ≥ 0.5 wt% to ≤ 5 wt%, or ≥ 1 wt% to ≤ 3 wt% based on 100 wt% of the positive electrode active material layer.

### Rechargeable Lithium Battery

Some example embodiments include a rechargeable lithium battery including the aforementioned positive electrode, negative electrode, and electrolyte. As an example, a rechargeable lithium battery may include a positive electrode, a negative electrode, a separator between the positive electrode and the negative electrode, and an electrolyte solution.

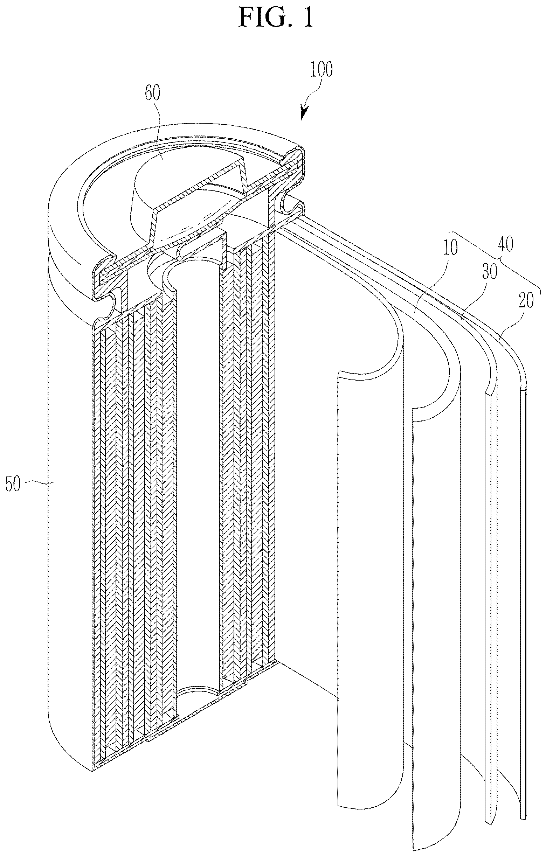

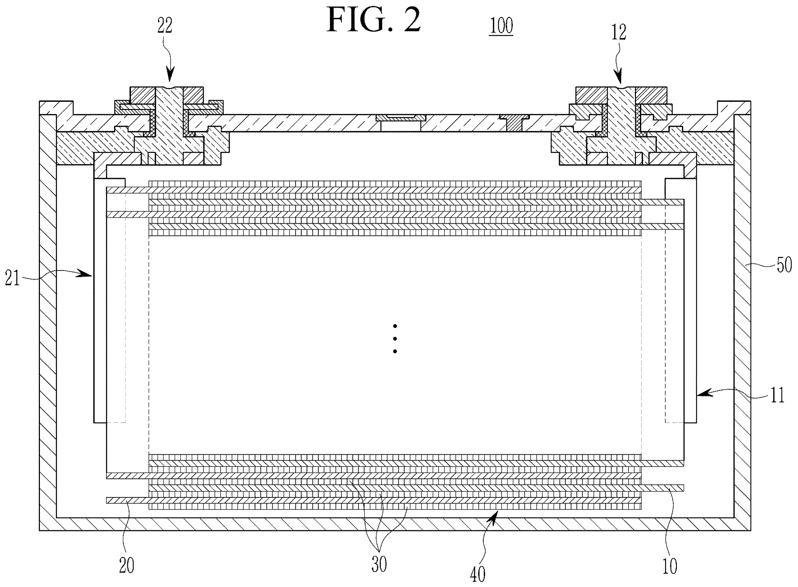

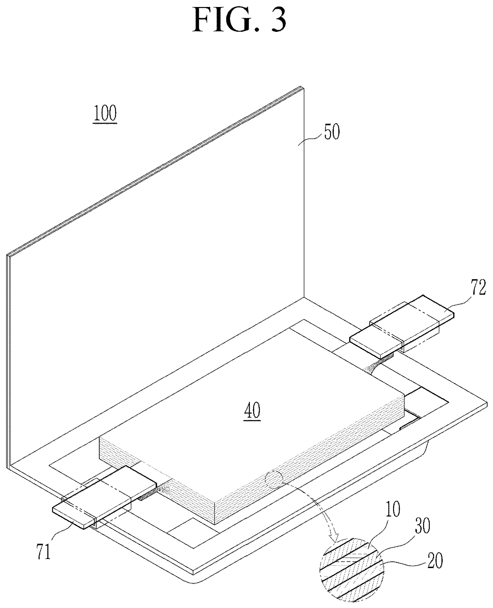

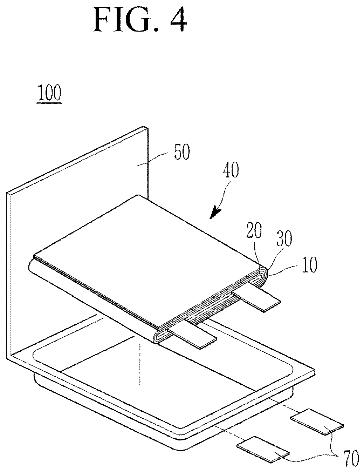

The rechargeable lithium battery may be classified into cylindrical, prismatic, pouch, coin, etc. depending on the shape thereof. FIGS. 1 to 4 are schematic diagrams showing the rechargeable lithium battery according to some example embodiments, where FIG. 1 illustrates a cylindrical battery, FIG. 2illustrates a prismatic battery, and FIGS. 3 and 4 illustrate a pouch-shaped battery. Referring to FIGS. 1 to 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. Additionally, in FIG. 2, the rechargeable lithium battery 100 may include a positive electrode lead tab 11, a positive electrode terminal 12, a negative lead tab 21, and a negative electrode terminal 22. As shown in FIGS. 3 and 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the rechargeable lithium battery 100.

### Negative Electrode

The negative electrode may include a current collector and a negative electrode active material layer on the current collector, and the negative electrode active material layer may include a negative electrode active material, and may further include a binder, a conductive material, or a combination thereof.

### Negative Electrode Active Material

The negative electrode active material may include at least one of a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The lithium metal alloy includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or include at least one of a Si-based negative electrode active material or a Sn-based negative electrode active material. The Si-based negative electrode active material may include at least one of silicon, a silicon-carbon composite, SiOₓ (0<x≤2), a Si-Q alloy (wherein Q is an element including at least one of an alkali metal, an alkaline-earth metal, a Group 13 element, a Group 14 element (excluding Si), a Group 15 element, a Group 16 element, a transition metal, a rare earth element, and a combination thereof, for example at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may be or include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of ≥ 0.5 µm to ≤ 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may exist dispersed in an amorphous carbon matrix.

The silicon-carbon composite may further include crystalline carbon. For example, the silicon-carbon composite may include a core including crystalline carbon and silicon particles and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, a silicon content may be in a range of ≥ 10 wt% to ≤ 50 wt% and a content of amorphous carbon may be ≥ 50 wt% to ≤ 90 wt% based on 100 wt% of the silicon-carbon composite. In addition, when the composite includes silicon, amorphous carbon, and crystalline carbon, a silicon content may be in a range of ≥ 10 wt% to ≤ 50 wt%, a content of crystalline carbon may be in a range of ≥ 10 wt% to ≤ 70 wt%, and a content of amorphous carbon may be in a range of ≥ 20 wt% to ≤ 40 wt% based on 100 wt% of the silicon-carbon composite.

Additionally, a thickness of the amorphous carbon coating layer may be in a range of ≥ 5 nm to ≤ 100 nm. An average particle diameter (D₅₀) of the silicon particles (primary particles) may be in a range of ≥ 10 nm to ≤ 1 µm, or ≥ 10 nm to ≤ 200 nm. The silicon particles may exist as silicon alone, in the form of a silicon alloy, or in an oxidized form. The oxidized form of silicon may be represented by SiOₓ (0<x≤2). For example, the atomic content ratio of Si:O, which indicates a degree of oxidation, may be in a range of ≥ 99:1 to ≤ 33:67. As used herein, when a definition is not otherwise provided, an average particle diameter (D₅₀) indicates a diameter of a particle where a cumulative volume is about 50 volume% in a particle size distribution.

The Si-based negative electrode active material or Sn-based negative electrode active material may be mixed with the carbon-based negative electrode active material. When the Si-based negative electrode active material or Sn-based negative electrode active material and the carbon-based negative electrode active material are mixed and used, the mixing ratio may be a weight ratio in a range of ≥ 1:99 to ≤ 90:10.

### Binder

The binder is configured to adhere the negative electrode active material particles to each other, and also to adhere the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

A content of the negative electrode active material may be in a range of ≥ 95 wt% to ≤ 99.5 wt% based on 100 wt% of the negative electrode active material layer, and a content of the binder may be in a range of ≥ 0.5 wt% to ≤ 5 wt% based on 100 wt% of the negative electrode active material layer. For example, the negative electrode active material layer may include ≥ 90 wt% to ≤ 99 wt% of the negative electrode active material, ≥ 0.5 wt% to ≤ 5 wt% of the binder, and ≥ 0.5 wt% to ≤ 5 wt% of the conductive material.

### Current Collector

The negative electrode current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, sheet, or foam. A thickness of the negative electrode current collector may be, for example, in a range of ≥ 1 µm to ≤ 20 µm, ≥ 5 µm to ≤ 15 µm, or ≥ 7 µm to ≤ 10 µm.

### Electrolyte

For example, the electrolyte for a rechargeable lithium battery may be or include an electrolyte solution, which may include a non-aqueous organic solvent and a lithium salt.

The non-aqueous organic solvent may constitute a medium for transmitting ions taking part in the electrochemical reaction of a battery. The non-aqueous organic solvent may be or include at least one of a carbonate-based solvent, an ester-based solvent, an ether-based solvent, a ketone-based solvent, an alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, dimethyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. In addition, the ketone-based solvent may include cyclohexanone, and the like. The alcohol-based solvent may include at least one of ethanol, isopropyl alcohol, and the like and the aprotic solvent may include at least one of nitriles such as R-CN (wherein R is a C2 to C20 linear, branched, or cyclic hydrocarbon group, and may include a double bond, an aromatic ring, or an ether group, and the like; amides such as dimethylformamide; dioxolanes such as 1,3-dioxolane, 1,4-dioxolane, and the like; sulfolanes, and the like.

The non-aqueous organic solvent can be used alone or in a mixture of two or more types of solvents, and when two or more types of solvents are used in a mixture, a mixing ratio can be appropriately adjusted according to the desired battery performance.

When using a carbonate-based solvent, a cyclic carbonate and a chain carbonate may be mixed and used, and the cyclic carbonate and the chain carbonate may be mixed in a volume ratio of ≥ 1:1 to ≤ 1:9.

The non-aqueous organic solvent may further include an aromatic hydrocarbon-based organic solvent. For example, a carbonate-based solvent and an aromatic hydrocarbon-based organic solvent may be mixed and used in a volume ratio of ≥ 1:1 to ≤ 30:1.

The electrolyte solution may further include at least one of vinyl ethylene carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolved in the organic solvent is configured to supplies lithium ions in a battery, to enable a basic operation of a rechargeable lithium battery, and to improve transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of ≥ 0.1 M to ≤ 2.0 M. When the concentration of lithium salt is within the above range, the electrolyte solution has appropriate ionic conductivity and viscosity, and thus a desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of any one polymer including at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON (polytetrafluoroethylene), or a copolymer or mixture of two or more thereof.

The porous substrate may have a thickness in a range of ≥ 1 µm to ≤ 40 µm, for example, ≥ 1 µm to ≤ 30 µm, ≥ 1 µm to ≤ 20 µm, ≥ 5 µm to ≤ 15 µm, or ≥ 10 µm to ≤ 15 µm.

The organic material may include a (meth)acrylic copolymer including at least one of a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of ≥ 1 nm to ≤ 2000 nm, for example, ≥ 100 nm to ≤ 1000 nm, or ≥ 100 nm to ≤ 700 nm.

The organic material and the inorganic material may be mixed in one coating layer, or a coating layer including an organic material and a coating layer including an inorganic material may be stacked.

The thickness of the coating layer may be in a range of ≥ 0.5 µm to ≤ 20 µm, for example, ≥ 1 µm to ≤ 10 µm, or ≥ 1 µm to ≤ 5 µm.

Examples and comparative examples of the present disclosure are described below. However, the following examples are only examples of the present disclosure, and the present disclosure is not limited to the following examples.

### Preparation Example 1

After adding NMP to a 100 ml 3-necked round bottom flask substituted with nitrogen gas, BPADA (4,4'-(4,4'-isopropylidene diphenoxy) bis-(phthalic anhydride)) and APPS (bis(3-aminopropyl) terminated poly(dimethyl siloxane)) were added thereto and then, dissolved therein by heating. After adding NMP to another 500 mL 3-necked round bottom flask, and BPADA (4,4'-(4,4'-isopropylidene diphenoxy)bis-(phthalic anhydride)) and m-PDA (m-Phenylenediamine) were added thereto and dissolved therein by heating. Subsequently, the solution in which BPADA and m-PDA were reacted was added to the round bottom flask containing the solution in which BPADA and APPS were reacted to react two solutions by heating at 180 °C under a nitrogen atmosphere for 12 hours to manufacture a PDMS-PI binder (Mw: 1,000,000 g/mol) including a siloxane-based repeating unit represented by Chemical Formula 21 and an imide-based repeating unit represented by Chemical Formula 22. Herein, the siloxane-based repeating unit was adjusted to be 30 wt%, while the imide-based repeating unit was adjusted to be 70 wt%, based on 100 wt% of total weights of the binder. In addition, the weight average molecular weight (Mw) was measured by gel permeation chromatography (GPC: gel permeation chromatography, PL GPC220, Agilent Technologies).

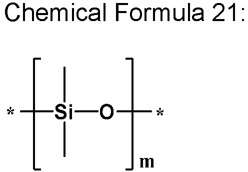

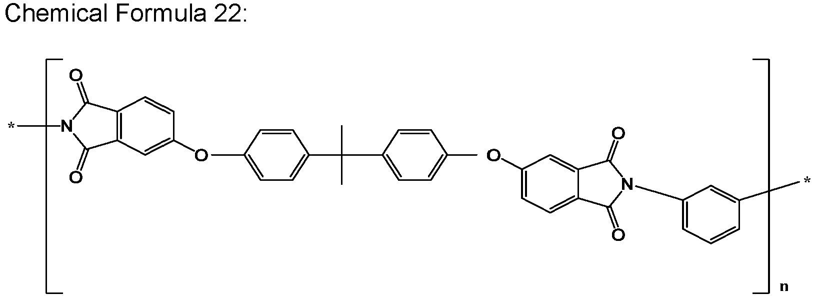

### Preparation Example 2

A binder was prepared substantially in the same manner as in Preparation Example 1, with a difference that the raw material contents were controlled to be 40 wt% of the siloxane-based repeating unit and 60 wt% of the imide-based repeating unit based on 100 wt% of the total weights of the binder.

### Comparative Preparation Example 1

A binder was prepared substantially in the same manner as in Preparation Example 1, with a difference that the raw material contents were controlled to be 50 wt% of the siloxane-based repeating unit and 50 wt% of the imide-based repeating unit based on 100 wt% of the total weights of the binder.

### Example 1

95 wt% of LiFePO₄ (D₅₀ = 1 µ m), 2.5 wt% of the binder according to Preparation Example 1, and 2.5 wt% of Super P were dissolved in 30 ml of an NMP solvent to prepare a positive electrode slurry, and the positive electrode slurry was coated on an aluminum foil and then, dried and compressed to manufacture a positive electrode.

A negative electrode slurry was prepared by mixing 97.5 wt% of graphite negative electrode active material, 1.5 wt% of carboxymethyl cellulose, and 1 wt% of styrene butadiene rubber in a water solvent. The negative electrode slurry was coated on a copper foil current collector, dried, and pressed, manufacturing a negative electrode.

The positive and negative electrodes were used with a polytetrafluoroethylene separator and an electrolyte solution prepared by dissolving 1 M LiPF₆ in a mixed solvent of ethylene carbonate and dimethyl carbonate in a volume ratio of 3:7 to manufacture a rechargeable lithium battery cell in a common method.

### Example 2

A positive electrode and a rechargeable lithium battery cell were manufactured substantially in the same manner as in Example 1, with a difference that the content of the binder of Preparation Example 1 was changed from 2.5 wt% to 2 wt% in preparing the positive electrode slurry.

### Example 3

A positive electrode and a rechargeable lithium battery cell were manufactured substantially in the same manner as in Example 1, with a difference that the binder of Preparation Example 2 was used instead of the binder of Preparation Example 1.

### Comparative Example 1

A positive electrode and a rechargeable lithium battery cell were manufactured substantially in the same manner as in Example 1, with a difference that a PVdF binder was used instead of the binder of Preparation Example 1 in preparing the positive electrode slurry.

### Comparative Example 2

A positive electrode and a rechargeable lithium battery cell were manufactured substantially in the same manner as in Example 1, with a difference that a polyimide binder prepared by not adding APPS was used instead of the binder of Preparation Example 1 in preparing the positive electrode slurry.

### Comparative Example 3

A positive electrode and a rechargeable lithium battery cell were manufactured substantially in the same manner as in Example 1, with a difference that the binder of Comparative Preparation Example 1 was used instead of the binder of Preparation Example 1 in preparing the positive electrode slurry.

### Evaluation Example 1: Evaluation of Adhesive Force

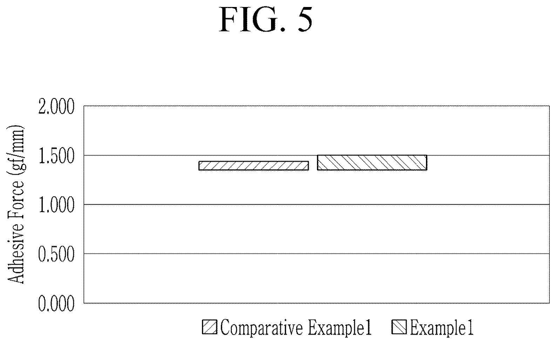

Each of the positive electrodes of Example 1 and Comparative Example 1 was evaluated with respect to adhesiveness by attaching a polyvinylchloride (PVC) double-sided adhesive tape to its positive electrode active material layer and then, peeling off the tape to 180 ° at 100 mm/min to measure an adhesive force (gf/mm) by using a universal testing machine, and the results are shown in FIG. 5.

Referring to FIG. 5, the positive electrode of Example 1, compared to the positive electrode manufactured by using a PVdF binder according to Comparative Example 1, was confirmed to exhibit an equivalent or higher adhesive force.

### Evaluation Example 2: Evaluation of Flexibility of Binder Itself

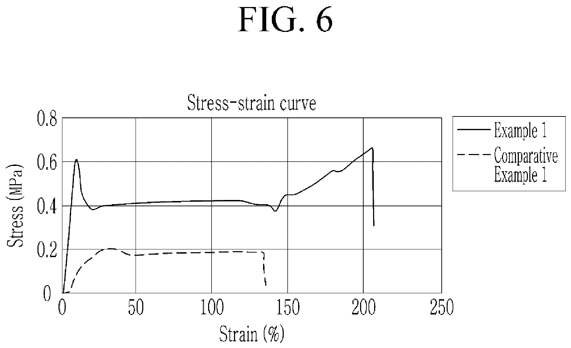

In order to evaluate flexibility of a binder itself, the binder used in Example 1 and the PVdF binder used in Comparative Example 1 were respectively dissolved to prepare each solution, and each solution was poured into a TEFLON (polytetrafluoroethylene) mold to volatilize the solvent and then, vacuum-dried at 100 °C for 4 hours to completely remove residual moisture to form films. Stress-strain curves of the films at 100 mm/min were obtained by using a universal testing machine, and the results are shown in FIG. 6.

Referring to FIG. 6, Example 1, compared to Comparative Example 1, was confirmed to have strain changes according to stress and a higher maximum strain. Accordingly, when flexibility of a binder itself was evaluated, the binder used in Example 1 exhibited desired or improved flexibility, compared to the binder used in Comparative Example 1.

### Evaluation Example 3: Evaluation of Flexibility of Electrode Plate

The positive electrodes according to Examples 1 to 3 and Comparative Examples 1 and 2 were manufactured into specimens, the surfaces of which were visually examined to determine whether or not cracks occurred, wherein when the cracks occurred, '○' was given, but when the cracks did not occur, '×' was given, and the results are shown in Table 1.

In addition, the positive electrodes according to Examples 1 to 3 and Comparative Examples 1 and 2 were measured with respect to 3-point bending strength by using a 3-point bending analysis device, and the results are also shown in Table 1 below.

**Table 1:**

| | Presence or absence of cracks | 3-point bending strength (N) |
|---|---|---|
| Example 1 | × | 0.74 |
| Example 2 | × | 0.71 |
| Example 3 | × | 0.66 |
| Comparative Example 1 | × | 0.83 (rupture) |
| Comparative Example 2 | ○ | (immeasurable) |

Referring to Table 1, Examples 1 to 3 exhibited no cracks and low 3-point bending strength.

On the other hand, Comparative Example 1 exhibited no cracks but high 3-point bending strength, and ruptured while measuring the 3-point bending strength.

In addition, because Comparative Example 2 exhibited cracks on an electrode plate before measuring the 3-point bending strength, the 3-point bending strength itself was not measurable.

Referring to the results, the positive electrodes of Examples 1 to 3, compared to the positive electrodes of Comparative Examples 1 and 2, exhibited desired or improved flexibility.

### Evaluation Example 4: Evaluation of Elongation and Tensile Strength

The positive electrodes according to Example 1 and Comparative Example 1 were manufactured into 10 cm-long specimens, which were stretched at 100 mm/min by using a universal testing machine. A ratio of stretched length to an initial length was calculated to obtain an elongation (%), and a force when each specimen was broken was measured as tensile strength (MPa). The results are shown in Table 2 below.

**Table 2:**

| | Elongation (%) | Tensile strength (MPa) |
|---|---|---|
| Example 1 | 204% | 0.66 |
| Comparative Example 1 | 134% | 0.20 |

Referring to Table 2, Example 1, compared to Comparative Example 1, exhibited desired or improved elongation characteristics. Accordingly, the positive electrode of Example 1, compared to the positive electrode of Comparative Example 1, exhibited desired or improved flexibility.

### Evaluation Example 5: Evaluation of Oxidation Resistance

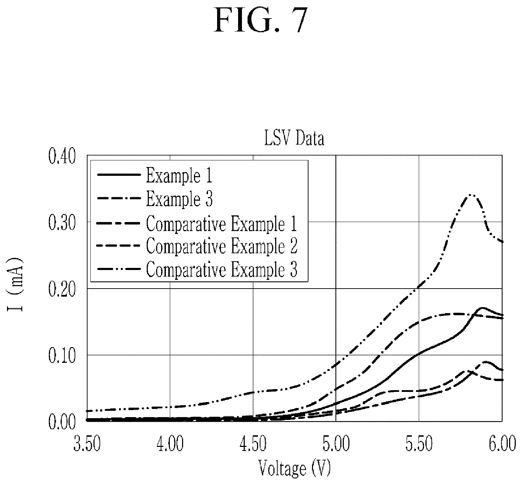

In order to evaluate oxidation resistance, the rechargeable lithium battery cells of Examples 1 and 3 and Comparative Examples 1 to 3 were evaluated with respect to oxidation electrode decomposition in a linear sweep voltammetry (LSV) method at 25 °C, and the results are shown in FIG. 7.

Referring to FIG. 7, Comparative Example 1 using a PVdF binder and Comparative Example 2 using a polyimide binder alone exhibited the most desired or improved oxidation resistance, but Examples 1 and 3 using a binder into which a siloxane-based repeating unit was introduced to improve flexibility and adhesiveness exhibited close oxidation resistance to the oxidation resistances of Comparative Examples 1 and 2.

On the contrary, Comparative Example 3 using a binder prepared by introducing a siloxane-based repeating unit but not satisfying its content ratio exhibited the most inferior oxidation resistance, because the binder started to be decomposed before 4 V due to the excessive content of the siloxane-based repeating unit, resulting in deteriorated battery safety.

### Evaluation Example 6: Evaluation of Cycle-life Characteristics

The rechargeable lithium battery cells of Example 1 and Comparative Example 1 were constant current-charged to a voltage of 3.7 V at a current rate of 0.2 C at 25 °C. Subsequently, the rechargeable lithium battery cells were discharged to a voltage of 2.5 V at a constant current of 0.2 C.

The rechargeable lithium battery cells completed with the formation were charged to a voltage of 3.7 V at a constant current of 0.5 C at 25 °C. Subsequently, the rechargeable lithium battery cells were discharged to a voltage of 2.5 V at the constant current of 0.5 C (1^{st} cycle). This charging and discharging cycle was repeated 50 times. In all the charge and discharge cycles, a pause of 10 minutes was allowed after each charge/discharge cycle.

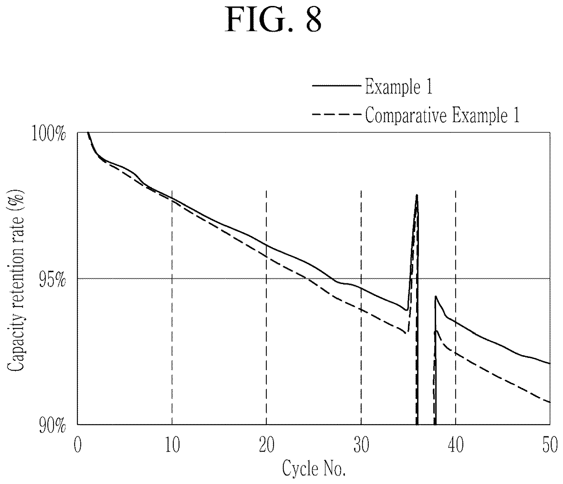

From the above charge and discharge experiment, a capacity retention rate was measured at each cycle according to Equation 1 below, and the results are shown in FIG. 8. Capacity retention rate (%) = (discharge capacity at each cycle)/(discharge capacity at first cycle) × 100

Referring to FIG. 8, Example 1, compared to Comparative Example 1, exhibited desired or improved capacity retention rates at almost all the cycles.

While this disclosure has been described in connection with what is presently considered to be practical example embodiments, it is to be understood that the disclosure is not limited to the disclosed example embodiments. On the contrary, this disclosure is intended to cover various modifications and equivalent arrangements included within the spirit and scope of the appended claims.

**Description of Symbols:**

| | | | |
|---|---|---|---|
| 100: | rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode (10), comprising:
a positive electrode current collector; and
a positive electrode active material layer on the positive electrode current collector, wherein:
the positive electrode active material layer includes a positive electrode active material, a binder, and a conductive material,
the binder includes a siloxane-based repeating unit and an imide-based repeating unit, and
the binder includes the siloxane-based repeating unit in an amount of ≥ 1 wt% to ≤ 49 wt% based on 100 wt% of the total binder.

2. The positive electrode (10) as claimed in claim 1, wherein the siloxane-based repeating unit comprises a siloxane group substituted or unsubstituted with at least one of an alkyl group, an alkenyl group, an alkynyl group, a cycloalkyl group, and an aryl group.

3. The positive electrode (10) as claimed in claim 1 or 2, wherein the siloxane-based repeating unit includes a siloxane group substituted or unsubstituted with a methyl group.

4. The positive electrode (10) as claimed in any of the claims 1 to 3, wherein the siloxane-based repeating unit has a structure represented by Chemical Formula 1: 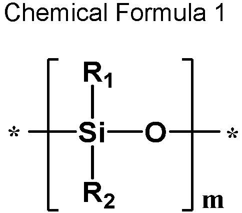
wherein, in Chemical Formula 1,
R₁ and R₂ each independently comprises a substituted or unsubstituted C1 to C5 alkyl group,
m is an integer in a range of 100 to 3,000, and
* indicates a position linked to another element.

5. The positive electrode (10) as claimed in any of the claims 1 to 4, wherein the imide-based repeating unit comprises at least one of an imide group and an ether group.

6. The positive electrode (10) as claimed in any of the claims 1 to 5, wherein the imide-based repeating unit comprises an aromatic ring.

7. The positive electrode (10) as claimed in any of the claims 1 to 6, wherein the imide-based repeating unit has a structure represented by Chemical Formula 3: 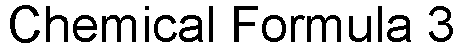 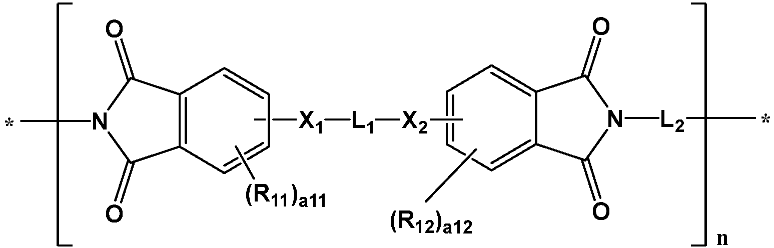
wherein, in Chemical Formula 3,
X₁ and X₂ each independently comprises at least one of O and S,
L₁ comprises at least one of a substituted or unsubstituted C1 to C5 alkylene group, and a substituted or unsubstituted C6 to C20 arylene group,
L₂ comprises a substituted or unsubstituted C6 to C20 arylene group, R₁₁ and R₁₂ each independently comprises at least one of hydrogen, deuterium, a halogen, and a C1 to C5 alkyl group,
a₁₁ and a₁₂ are each independently an integer in a range of 1 to 3,
n is an integer in a range of 100 to 2,500, and
* indicates a position linked to another element.

8. The positive electrode (10) as claimed in any of the claims 1 to 7, wherein the imide-based repeating unit has a structure represented by Chemical Formula 4: 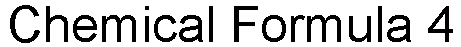 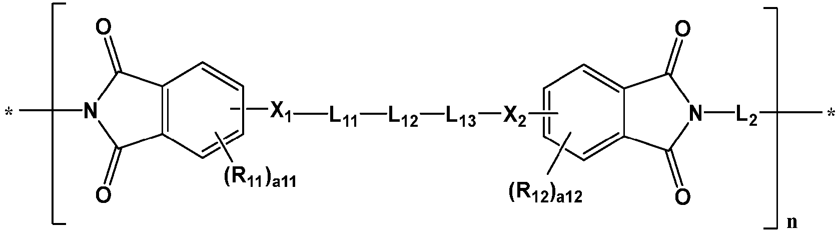
wherein, in Chemical Formula 4,
X₁ and X₂ each independently comprises at least one of O and S,
L₂, L₁₁ and L₁₃ each independently comprises C6 to C20 arylene group,
L₁₂ comprises a substituted or unsubstituted C1 to C5 alkylene group,
R₁₁ and R₁₂ each independently comprises at least one of hydrogen, deuterium, a halogen, and a C1 to C5 alkyl group,
a₁₁ and a₁₂ are each independently an integer in a range of 1 to 3,
n is an integer in a range of 100 to 2,500, and
* indicates a position linked to another element.

9. The positive electrode (10) as claimed in any of the claims 1 to 8, wherein the binder comprises ≥ 51 wt% to ≤ 99 wt% of the imide-based repeating unit.

10. The positive electrode (10) as claimed in any of the claims 1 to 9, wherein the binder has a weight average molecular weight (Mw) in a range of ≥ 100,000 g/mol to ≤ 2,000,000 g/mol.

11. The positive electrode (10) as claimed in any of the claims 1 to 10, wherein the binder does not include fluorine.

12. The positive electrode (10) as claimed in any of the claims 1 to 11, wherein the positive electrode active material comprises at least one of lithium cobalt oxide, lithium nickel oxide, lithium nickel cobalt oxide, lithium nickel cobalt aluminum oxide, lithium nickel cobalt manganese oxide, lithium nickel manganese oxide, lithium manganese oxide, a lithium iron phosphate compound, and a lithium manganese iron phosphate compound.

13. The positive electrode (10) as claimed in any of the claims 1 to 12, wherein:
the positive electrode active material comprises lithium transition metal phosphate, and
the lithium transition metal phosphate comprises one or more of the compounds represented by Chemical Formulas 11 to 15:
Chemical Formula 11: Liₐ₁Fe₍₁₋ₓ₁₎M¹ₓ₁PO₄
wherein, in Chemical Formula 11, 0.90≤a1 ≤1.5, 0≤x1 ≤0.4, and M¹ comprises at least one of Al, Ca, Ce, Cr, Cu, La, Mg, Mn, Mo, Nb, Ni, Sn, Sr, Ti, V, W, Y, Zn, and Zr,
Chemical Formula 12: Liₐ₂Mnₓ₂Fe_{(1-x2-y2)}M²_{y2}PO₄
wherein, in Chemical Formula 12, 0.90≤a2≤1.5, 0.1≤x2≤0.9, 0≤y2≤0.9, and M² comprises at least one of Al, Ca, Ce, Cr, Cu, La, Mg, Mo, Nb, Ni, Sn, Sr, Ti, V, W, Y, Zn, and Zr,
Chemical Formula 13: Liₐ₃Mn₍₁₋ₓ₃₎M³ₓ₃PO₄
wherein, in Chemical Formula 13, 0.90≤a3≤1.5, 0≤x3≤0.4, and M³ comprises at least one of Al, Ca, Ce, Cr, Cu, La, Mg, Mo, Nb, Ni, Sn, Sr, Ti, V, W, Y, Zn, and Zr,
Chemical Formula 14: Liₐ₄Ti₍₂₋ₓ₄₎M⁴ₓ₄(PO₄)₃
wherein, in Chemical Formula 14, 0.90≤a4≤1.5, 0≤x4≤0.4, and M⁴ comprises at least one of Al, Ca, Ce, Cr, Cu, La, Mg, Mo, Nb, Ni, Sn, Sr, V, W, Y, Zn, and Zr, and
Chemical Formula 15: Liₐ₅Ti₍₁₋ₓ₅₎M⁵ₓ₅PO₅
wherein, in Chemical Formula 15, 0.90≤a5≤1.5, 0≤x5≤0.4, and M⁵ comprises at least one of Al, Ca, Ce, Cr, Cu, La, Mg, Mo, Nb, Ni, Sn, Sr, V, W, Y, Zn, and Zr.

14. A rechargeable lithium battery (100), comprising:
the positive electrode (10) as claimed in any of the claims 1 to 13;
a negative electrode (20); and
an electrolyte.
